# EUROPEAN PATENT SPECIFICATION

(11) **EP 2 600 512 B1**
(45) Date of publication and mention of the grant of the patent: **23.09.2015**
(21) Application number: 12760162.3
(22) Date of filing: 26.05.2012
(51) Int. Cl.: H02M 3/28, H01F 27/28, H01F 27/24, H01F 30/06, H02M 1/42

(54) **RESONANT CONVERSION CIRCUIT**
RESONANZWANDLER
CIRCUIT DE CONVERSION RÉSONNANT

(30) Priority: 22.03.2012 CN 201210079193
(43) Date of publication of application: 05.06.2013
(73) Proprietor: Huawei Technologies Co., Ltd., Longgang District Shenzhen, Guangdong 518129 (CN)
(72) Inventor: XU, Jinzhu, Shenzhen, Guangdong 518129 (CN); PAN, Denghai, Shenzhen, Guangdong 518129 (CN)
(74) Representative: Maiwald Patentanwalts GmbH
(86) International application number: PCT/CN2012/076129
(87) International publication number: WO 2012/126436

(56) References cited:
- WO-A1-2008/022654
- CN-A- 1 734 905
- CN-A- 101 325 368
- CN-A- 102 013 806
- CN-A- 102 074 340
- CN-A- 102 324 852
- CN-U- 201 498 321
- JP-A- S61 198 927
- JP-A- 2001 078 449
- JP-A- 2007 043 765
- US-A- 4 692 667
- US-A1- 2009 046 486
- US-A1- 2009 154 200
- US-A1- 2010 289 607
- US-A1- 2011 234 191
- US-B1- 6 246 599

## Description

### FIELD OF THE INVENTION

The present invention relates to the power supply field, and in particular, to a resonant conversion circuit.

### BACKGROUND OF THE INVENTION

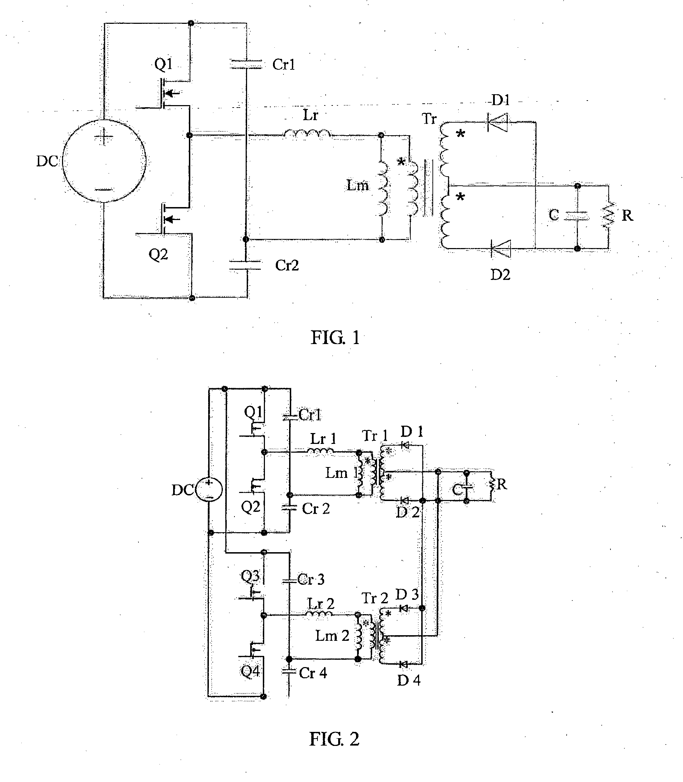

A resonant conversion circuit has an advantage of high conversion efficiency, and therefore gains wider and wider application. FIG. 1 shows a typical LLC symmetric half-bridge resonant conversion circuit unit, including switch devices Q1 and Q2, a resonant inductor Lr, a magnetizing inductor Lm of a transformer Tr, resonant capacitors Cr1 and Cr2, and rectifier devices D1 and D2. The resonant conversion circuit is connected to a direct current power supply, and the energy of the power supply is transferred through a primary side of the transformer to a secondary side of the transformer, filtered by a filter capacitor C and then supplied to a load R.

Although the resonant conversion circuit is capable of achieving higher conversion efficiency, a ripple current passing the filter capacitor C tends to exceed a specified value easily during large power output. Therefore, in practical application, electricity is usually supplied to the load in a manner of interleaving two resonant conversion circuit units in parallel. For example, as shown in FIG. 2, two LLC resonant conversion circuit units having same parameters are in parallel, their input ends are connected in parallel to the direct current power supply, and their output ends are connected in parallel to the filter capacitor C and the load R. Primary-side switch devices of the power supply of the two LLC resonant conversion circuits work at a same frequency, with a working phase difference of 90 degrees, and After rectification, a phase difference of secondary side output current is 180 degrees. Ripple currents are offset mutually, and the ripple current flowing through the filter capacitor C is reduced.

However, in practical buck-manufactured products, because actual parameters of a resonant inductor, a resonant capacitor, and a transformer may inevitably have some deviations from standard value, gains of interleaved parallel resonant cavities may be different. Therefore, even though two resonant conversion circuit units work at a same switching frequency, the value of a current flowing through each resonant conversion unit is different from the other. In a case where the circuit is extremely not current balancing, a current in one phase of the circuit may be too great, thereby damaging a device.

US 6,246,599 B1 describes a constant frequency DC/AC inverter that employs a coupled inductor. Two windings of the coupled inductors are connected in series.

JP 2007-43765 describes a switching power supply with a switching circuit, a transformer for voltage conversion, and an inductor for resonance.

US 4,692,667 describes obtaining a center-tapped DC power to a self-oscillating full-bridge inverter-type fluorescent lamp ballast from a regular power line by way of a voltage doubler.

WO 2008/022654 A1 describes an electric current source comprising one resonance converter which has a clocked bridge circuit that is connected to an electric direct current source.

US 2010/0289607 A1 describes a transformer with a base, a magnetic core assembly, and one winding coil assembly wound around the magnetic core assembly.

JP S61-198927 describes a frequency shift modulation signal injecting device utilizing coarsely coupled transformer.

CN 102074340 A describes a transformer structure with a magnetic core, a coil winding, a coil reel and an insulation casing cover. The coil winding is provided with a primary side coil and a secondary side coil which wind on the coil reel and are integrated with the magnetic core, wherein a primary side input connection end and a reel clamping part are arranged on the coil reel.

CN 201498321 U describes an electronic transformer having a combined magnetic core which has adjustable inductance, can reduce the power consumption of inducing elements and can reduce the volumes of the inducing elements.

US 2011/0234191 A1 describes multi-channel converter with a switch control device.

US 2009/0154200 A1 describes a controller circuit with a step-up controller, a resonant converter, a transformer, a rectifier, and a resonant circuit connected to the resonant converter and to the transformer.

### SUMMARY OF THE INVENTION

In view of this, embodiments of the present invention provide a resonant conversion circuit, for a purpose of solving a problem that current sharing is not achieved between existing interleaved and parallel-connected resonant conversion circuit units.

The invention is defined by the appended claims.

In order to achieve the foregoing purpose, the embodiments of the present invention provide the following solutions.

A resonant conversion circuit includes:
resonant conversion circuit units having at least two phases interleaved in parallel, wherein magnetic devices in the resonant conversion circuit units are magnetically integrated in an inter-phase manner on a same magnetic core.

The resonant conversion circuit provided by the embodiments of the present invention is formed by interleaved and parallel-connected resonant conversion circuit units, where magnetic devices of different phases are integrated on the same magnetic core. A magnetic coupling action exists between the magnetic devices integrated on the same magnetic core, and therefore, automatic current sharing effect is produced between currents in circuit branches of different phases. In this way, current sharing of resonant conversion circuit units of various phases in the resonant conversion circuit is achieved.

### BRIEF DESCRIPTION OF THE DRAWINGS

To illustrate technical solutions in embodiments of the present invention more clearly, accompanying drawings required for describing the embodiments are introduced in the following briefly. Apparently, the accompanying drawings in the following descriptions are only some of the embodiments of the present invention, and persons of ordinary skill in the art can obtain other drawings according to these accompanying drawings without creative efforts.
FIG. 1 is a schematic circuit diagram of an LLC symmetric half-bridge resonant conversion circuit unit;
FIG. 2 is a schematic circuit diagram of existing interleaved parallel LLC resonant conversion circuit units;
FIG. 3(a) and FIG. 3(b) are schematic circuit diagrams of a resonant conversion circuit according to an embodiment of the present invention;
FIG. 4 is a schematic structural diagram of a magnetically integrated resonant inductor Lr according to an embodiment of the present invention;
FIG. 5 is a schematic structural diagram of another magnetically integrated resonant inductor Lr according to an embodiment of the present invention;
FIG. 6(a) and FIG. 6(b) are schematic circuit diagrams of another resonant conversion circuit according to an embodiment of the present invention;
FIG. 7 is a schematic structural diagram of a magnetically integrated first-phase resonant inductor Lr1 and a second-phase transformer Tr2, or of a magnetically integrated second-phase resonant inductor Lr2 and a first-phase transformer Tr1 according to an embodiment of the present invention;
FIG. 8(a) and FIG. 8(b) are schematic circuit diagrams of another resonant conversion circuit according to an embodiment of the present invention;
FIG. 9 is a schematic structural diagram of a magnetically integrated transformer Tr according to an embodiment of the present invention.

### DETAILED DESCRIPTION OF THE EMBODIMENTS

Embodiments of the present invention disclose a resonant conversion circuit. Magnetic devices in resonant conversion circuit units having two phases or multiple phases interleaved in parallel are integrated on a same magnetic core, and therefore, current sharing between resonant conversion circuit units of different phases is achieved by using a magnetic coupling action. In this way, a problem that current sharing is not achieved in resonant conversion circuit units of various phases in an existing resonant conversion circuit is solved.

Technical solutions in the embodiments of the present invention are described clearly and completely below with reference to accompanying drawings in the embodiments of the present invention. Apparently, the described embodiments are only part rather than all of the embodiments of the present invention. All other embodiments obtained by persons of ordinary skill in the art without creative efforts based on the embodiments of the present invention fall within the protection scope of the present invention.

An embodiment of the present invention discloses a resonant conversion circuit, including: resonant conversion circuit units having two phases or multiple phases interleaved and connected in parallel, where magnetic devices in the resonant conversion circuit units are inter-phase magnetically integrated on a same magnetic core.

Optionally, a resonant conversion circuit unit may be a symmetric half-bridge LLC resonant conversion circuit unit, and may also be an asymmetric half-bridge LLC resonant conversion circuit unit.

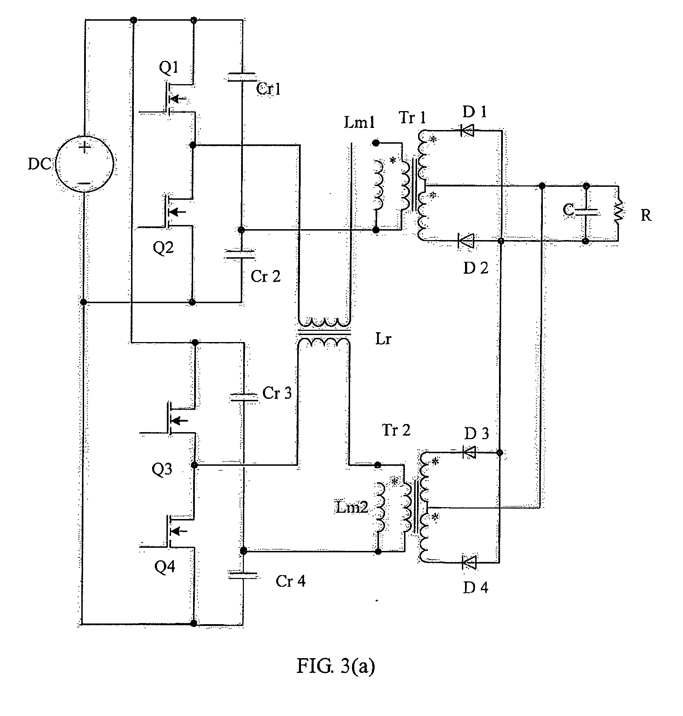

A resonant conversion circuit shown in FIG. 3(a) is a two-phase symmetric half-bridge LLC resonant conversion circuit formed by two interleaved and parallel-connected LLC resonant conversion circuit units shown in FIG. 1, including first-phase switch devices Q1 and Q2, first-phase resonant capacitors Cr1 and Cr2, a first-phase transformer Tr1 and its magnetizing inductor Lm1, first-phase rectifier devices D1 and D2, second-phase switch devices Q3 and Q4, second-phase resonant capacitors Cr3 and Cr4, a second-phase transformer Tr2 and its magnetizing inductor Lm2, second-phase rectifier devices D3 and D4, and a magnetically integrated inductor Lr.

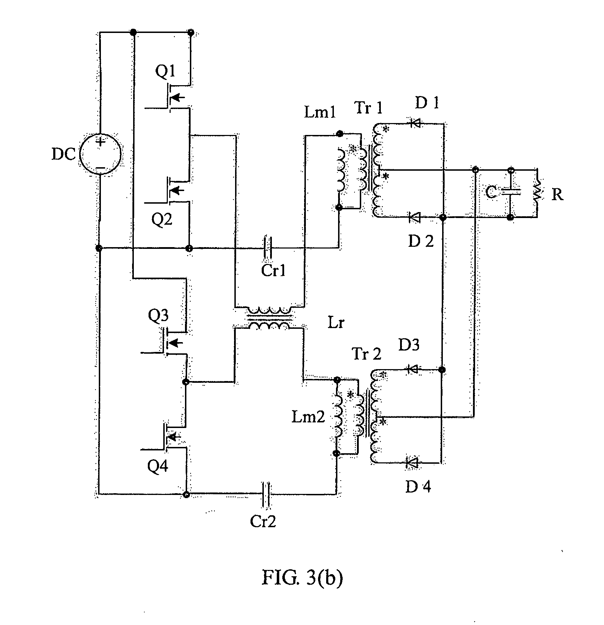

A resonant conversion circuit shown in FIG. 3(b) is a two-phase asymmetric half-bridge LLC resonant conversion circuit, the difference of which from that in FIG. 3a only lies in resonant capacitors, where in FIG. 3(b), a first-phase resonant capacitor is Cr1 and a second-phase resonant capacitor is Cr2.

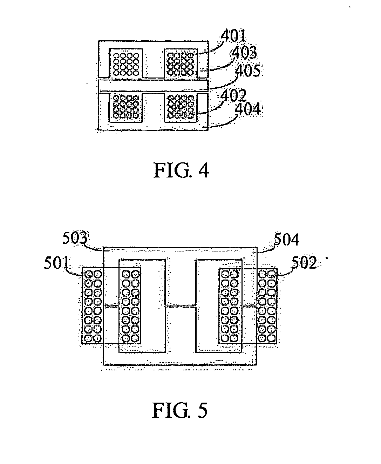

In FIG. 3(a) and FIG. 3(b), Lr is formed by magnetically integrating resonant inductors on the same magnetic core, where the resonant inductors are in the two resonant conversion circuit units. A specific magnetic integration manner may be shown in FIG. 4.

A first-phase resonant inductor 401 is disposed on a first E-type magnetic core 403, and a second-phase resonant inductor 402 is disposed on a second E-type magnetic core 404. A disposing manner may specifically be winding a coil of a resonant inductor around a central pillar of an E-type magnetic core, and integrating two E-type magnetic cores on one I-type magnetic core 405. A coupling coefficient between the resonant inductors of two phases may be adjusted by adjusting an air gap between the E-type magnetic core and the I-type magnetic core. A value of the coupling coefficient may determine current sharing effect between branches of the two phases. The larger the coupling coefficient is, the better the current sharing effect is. However, a too large coupling coefficient may affect the performance of a resonant circuit. In practical application, coupling inductance between the resonant inductors of the two phases may be 0.5% to 5% of inductance of a single phase.

Alternatively, the E-type magnetic core in FIG. 4 is replaced with a PQ-type magnetic core. A specific disposing manner of the magnetically integrated resonant inductor Lr may also be:
disposing the first-phase resonant inductor on a first PQ-type magnetic core, and disposing the second-phase resonant inductor on a second PQ-type magnetic core. The disposing manner may specifically be winding the coil of the resonant inductor around a central pillar of a PQ-type magnetic core, and integrating two PQ-type magnetic cores on one I-type magnetic core. Similarly, the coupling coefficient between the resonant inductors of the two phases may also be adjusted by adjusting an air gap between the PQ-type magnetic core and the I-type magnetic core.

Alternatively, the specific disposing manner of the magnetically integrated resonant inductor Lr may also be shown in FIG. 5.

A first E-type magnetic core 503 and a second E-type magnetic core 504 are disposed oppositely, so that a central pillar of the first E-type magnetic core is opposite to a central pillar of the second E-type magnetic core, two side pillars of the first E-type magnetic core are opposite to two side pillars of the second E-type magnetic core. A first-phase resonant inductor 501 and a second-phase resonant inductor 502 are separately disposed on two opposite side pillars. A disposing manner may specifically be winding a coil of a resonant inductor around a side pillar of an E-type magnetic core. an air gap is disposed on the side pillar. A coupling coefficient may be adjusted by adjusting the length of an air gap between the central pillars of the two E-type magnetic cores.

In the resonant conversion circuits shown in FIG. 3(a) and FIG. 3(b), the resonant conversion circuit units o the two phase are connected in parallel to a direct current power supply, primary side switch devices of the two resonant conversion circuit units work at a same frequency, with a working phase difference of 90 degrees. Electric energy is transferred through primary sides of the first-phase transformer and second-phase transformer to secondary sides of the first-phase transformer and second-phase transformer. After rectification of rectifier devices, the phase difference of current waveforms of the two phases is 180 degrees. In this way, ripple currents are offset mutually, filtered by a filter capacitor C, and then supplied to a load R. When a current passes the magnetically integrated inductor Lr, a magnetic coupling action is produced so that current sharing is achieved for the currents in branches of the two phases.

To verify automatic current sharing effect of the resonant conversion circuit described in the embodiment of the present invention, this embodiment provides the following circuit emulation experiment:

**Table 1 Emulation data table**

| Variable | | | | | | |
|---|---|---|---|---|---|---|
| Emulation | | | | | | Lr1 |
| (Resonant inductor) | | | | | | Lr2 |
| (Resonant inductor) | | | | | | Lm1\Lm2 |
| (Magnetizing inductor) | | | | | | Cr1\Cr2 |
| (Resonant capacitor) | | | | | | Cr3\ Cr4 |
| (Resonant capacitor) | | | | | | K |
| (Coupling coefficient of an integrated inductor) Emulation of current sharing effect | | | | | | |
| Emulation 1 | 12uH | 12uH | 72uH | 100nF\100nF | 100nF\100nF | 0 (50%, 50%) |
| Emulation 2 | 12uH | 12uH | 72uH | 97nF\ 97nF | 103nF\103nF | 0 (35.54%, 63.46%) |
| Emulation 3 | 12uH | 12uH | 72uH | 97nF\ 97nF | 103nF\103nF | 0.01 (45.71%, 54.29%) |

As shown in Table. 1, emulation 1 simulates an ideal state where resonant element parameters are consistent, that is, a first-phase resonant inductor Lr1 and a second-phase resonant inductor Lr2 are 12 uH each, and first-phase resonant capacitors Cr1 and Cr2 are both 100 nF. Emulation 2 simulates a practical use state where a resonant element parameter in the interleaved parallel resonant conversion circuit shown in FIG. 2 has a ±3% difference from a standard value, that is, the first-phase resonant inductor Lr1 and the second-phase resonant inductor Lr2 are 12 uH each, the first-phase resonant capacitors Cr1 and Cr2 are 97 nF each, and second-phase resonant capacitors Cr3 and Cr4 are 103 nF each. Emulation 3 simulates a practical use state where a resonant element parameter in the circuit shown in FIG. 3(a) of this embodiment also has a ±3% difference from a standard value, that is, a parameter of a resonant component in emulation 3 is the same as that in emulation 2. In a case where parameters of other components are the same, results of the three groups of emulation experiments show that in the ideal state where the resonant element parameters are consistent, currents of branches of two phases each accounts for 50% of the total current; in emulation 2 where resonant elements are not magnetically integrated, when the resonant element parameter has a ±3% difference from the standard value, the currents in the branches of the two phases accounts for 35.54% and 63.46% respectively, and it can be seen that, an obvious non-current sharing phenomenon occurs; in emulation 3 where the resonant devices are magnetically integrated in the circuit, when the resonant element parameter has a ±3% difference from the standard value, the current in the branches of the two phases accounts for 45.71% and 54.29% respectively, improving the non-current sharing effect in comparison with emulation 2.

In the resonant conversion circuit described in this embodiment, the resonant inductors of the two phases are integrated on the same magnetic core. Because magnetic coupling exists between the resonant inductors of the two phases, a problem which is non-current sharing of an input and output and is caused by inconsistency of resonant element parameters of the two phases, a precision requirement for the device parameters and the filtering cost during production is reduced, and the input and output currents between the two phases are balanced without any complicated control means, which increases the reliability of a power converter. In addition, a magnetic integration technology is used, and therefore the space that is occupied by a single integrated resonant inductor Lr in a power supply is smaller than a sum of volumes of two split resonant inductors. Therefore, the volume of the power supply is reduced and the power density of the power supply is further improved.

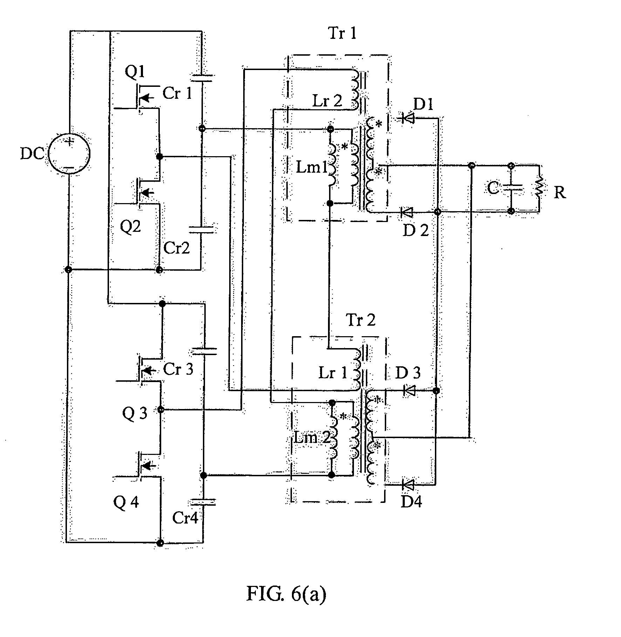

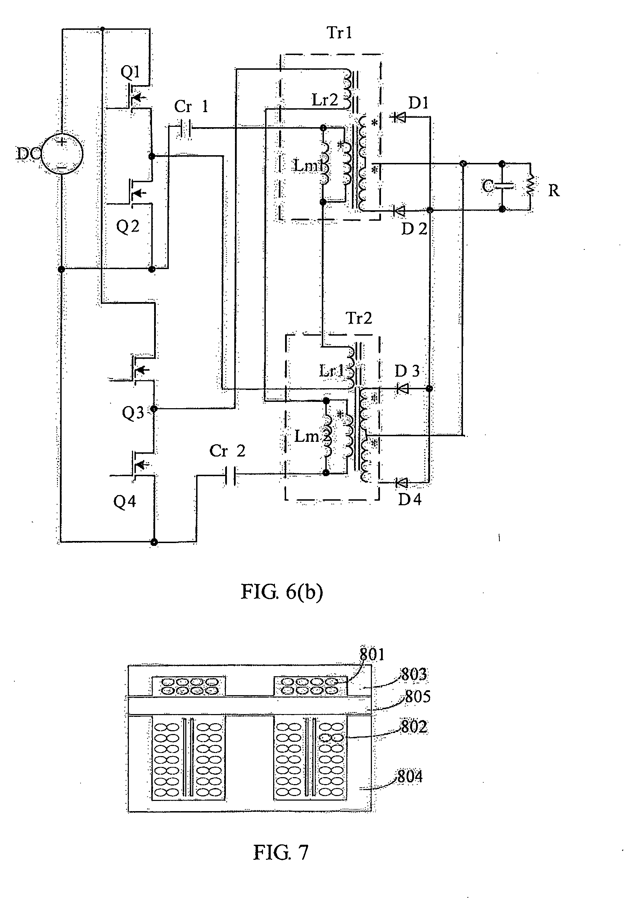

An embodiment of the present invention further discloses another resonant conversion circuit, as shown in FIG. 6. FIG. 6(a) shows a two-phase symmetric half-bridge LLC resonant conversion circuit formed by two interleaved and parallel-connected LLC resonant conversion circuit units shown in FIG. 1, including first-phase switch devices Q1 and Q2, a first-phase resonant inductor Lr1, first-phase resonant capacitors Cr1 and Cr2, a first-phase transformer Tr1 and its magnetizing inductor Lm1, first-phase rectifier devices D1 and D2, second-phase switch devices Q3 and Q4, a second-phase resonant inductor Lr2, second-phase resonant capacitors Cr3 and Cr4, a second-phase transformer Tr2 and its magnetizing inductor Lm2, and second-phase rectifier devices D3 and D4. The first-phase resonant inductor Lr1 and the second-phase transformer Tr2 are integrated on a same magnetic core, and the second-phase resonant inductor Lr2 and the first-phase transformer Tr1 are integrated on a same magnetic core. FIG. 6(b) shows a two-phase asymmetric half-bridge LLC resonant conversion circuit, the difference of which from that in FIG. 6(a) only lies in resonant capacitors, where in FIG. 6(b), a first-phase resonant capacitor is Cr1 and a second-phase resonant capacitor is Cr2.

In FIG. 6(a) and FIG. 6(b), a specific disposing manner for magnetically integrating the first-phase resonant inductor Lr1 and the second-phase transformer TR2 or the second-phase resonant inductor Lr2 and the first-phase transformer Tr1 may be shown in FIG. 7.

A first-phase (or second-phase) resonant inductor 801 is disposed on a first E-type magnetic core 803, and a second-phase (or first-phase) transformer 802 is disposed on a second E-type magnetic core 804. A disposing manner may specifically be winding a coil of the resonant inductor or primary and secondary coils of the transformer around a central pillar of an E-type magnetic core, and integrating two E-type magnetic cores on one I-type magnetic core 805. A coupling coefficient between the resonant inductor and the transformer may be adjusted by adjusting an air gap between the E-type magnetic core and the I-type magnetic core.

Alternatively, the E-type magnetic core is replaced with a PQ-type magnetic core. That is:
The first-phase (or second-phase) resonant inductor is disposed on a first PQ-type magnetic core, and the second-phase (or first-phase) transformer is disposed on a second PQ-type magnetic core. The disposing manner may specifically be winding the coil of the resonant inductor or primary and secondary coils of the transformer around a central pillar of a PQ-type magnetic core, and integrating two PQ-type magnetic cores on one I-type magnetic core. The coupling coefficient between the resonant inductor and the transformer may be adjusted by adjusting an air gap between the PQ-type magnetic core and the I-type magnetic core.

In the resonant conversion circuit described in this embodiment, the resonant inductor and the transformer are inter-phase magnetically integrated on the same magnetic core, solving a problem that current sharing is not achieved for currents in branches of two phases, and reducing the volume of the circuit.

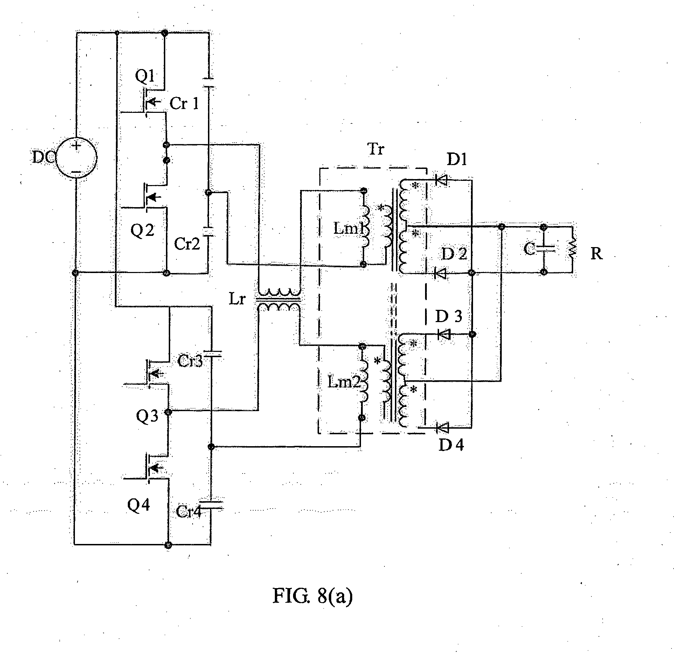

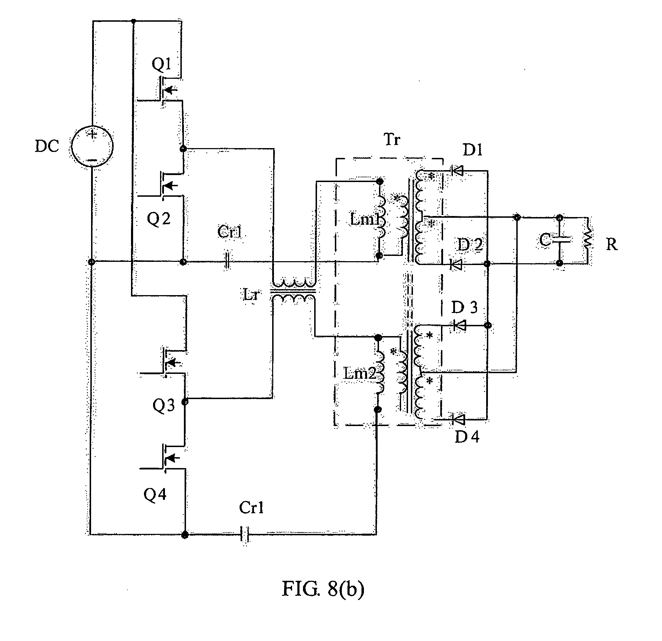

An embodiment of the present invention further discloses another resonant conversion circuit, as shown in FIG. 8. FIG. 8(a) shows a two-phase symmetric half-bridge LLC resonant conversion circuit formed by two interleaved and parallel-connected LLC resonant conversion circuit units, including first-phase switch devices Q1 and Q2, first-phase resonant capacitors Cr1 and Cr2, first-phase rectifier devices D1 and D2, second-phase switch devices Q3 and Q4, second-phase resonant capacitors Cr3 and Cr4, second-phase rectifier devices D3 and D4, a magnetically integrated transformer Tr (the magnetically integrated Tr includes magnetizing inductors Lm1 and Lm2), and a magnetically integrated resonant inductor Lr. The magnetically integrated transformer is formed by integrating transformers of two resonant circuit units on a same magnetic core, and the magnetically integrated resonant inductor is formed by integrating resonant inductors of two resonant circuit units on a same magnetic core. FIG. 8(b) shows a two-phase asymmetric half-bridge LLC resonant conversion circuit, the difference of which from that in FIG. 8(a) only lies in resonant capacitors, where in FIG. 8(b), a first-phase resonant capacitor is Cr1 and a second-phase resonant capacitor is Cr2

In FIG. 8(a) and FIG. 8(b), a disposing manner of the magnetically integrated resonant inductor Lr may be shown FIG. 4 or FIG. 5 of the foregoing embodiment.

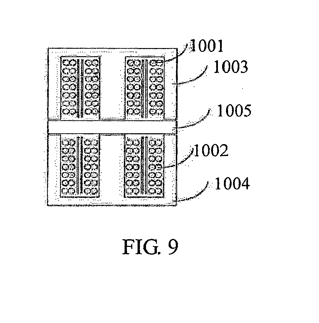

A specific disposing manner of the magnetically integrated transformer Tr may be shown in FIG. 9.

A first transformer 1001 is disposed on a first E-type magnetic core 1003, and a second transformer 1002 is disposed on a second E-type magnetic core 1004. A disposing manner may specifically be winding coils on primary and secondary sides of a transformer around a central pillar of an E-type magnetic core, and integrating two E-type magnetic cores on one I-type magnetic core 1005.

Alternatively, the E-type magnetic core is replaced with a PQ-type magnetic core. A specific disposing manner of the magnetically integrated transformer Tr may also be as follows:
The first transformer is disposed on a first PQ-type magnetic core, and the second transformer is disposed on a second PQ-type magnetic core. The disposing manner may specifically be winding the coils on the primary and secondary sides of the transformer around a central pillar of a PQ-type magnetic core, and integrating two PQ-type magnetic cores on one I-type magnetic core.

In the resonant conversion circuit described in this embodiment, resonant inductors in two resonant conversion circuit units are magnetically integrated on one magnetic core, and transformers in two resonant conversion circuit units are magnetically integrated on another magnetic core. In this way, not only automatic current sharing is achieved in the two-phase resonant conversion circuit, but also the volume of the circuit is reduced.

It should be noted that, the foregoing embodiments all use LLC resonant conversion units as examples for description. Those skilled in the art may easily find that in addition to the LLC resonant conversion units, the resonant conversion units may be series resonant conversion units, parallel resonant conversion units, series-parallel resonant conversion units and so on; and a connection type in the resonant conversion circuits is not limited to a symmetric half-bridge connection and a asymmetric half-bridge connection that are mentioned in the foregoing embodiments, but also includes a manner such as a full-bridge connection.

In the resonant conversion circuit described in the embodiments of the present invention, the magnetic devices are magnetically integrated in the inter-phase manner on the same magnetic core. Magnetic coupling exists between the magnetic devices of the two phases, thereby improving the problem which is non-current sharing of the input and output and is caused by the inconsistency of the resonant element parameters of the two phases, and reducing the precision requirement for the device parameters and the filtering cost during production, and balancing the input and output currents between the two phases without any complicated control means, which increases the reliability of power converters. In addition, the magnetic integration technology is used, and therefore, the volume of the power supply is reduced and the power density of the power supply is further improved.

All embodiments of the present invention are described in a progressive manner. Each embodiment emphasizes on illustration of the difference from other embodiments. For the same or similar parts among all embodiments, reference may be made to each other.

The foregoing illustration of the disclosed embodiments enables a person skilled in the art to implement or use the present invention. Multiple modifications to these embodiments are apparent for a person skilled in the art.

Variations and modifications are possible with in the scope of the appended claims.

## Claims

1. A resonant conversion circuit, comprising:
resonant conversion circuit units having at least two phases interleaved in parallel, wherein magnetic devices in the resonant conversion circuit units are magnetically integrated in an inter-phase manner on a same magnetic core (403, 404, 405);
**characterized in that**
a first phase resonant inductor (401) and a second phase resonant inductor (402) in the resonant conversion circuit units are magnetically integrated in the inter-phase manner on the same magnetic core;
wherein the first phase resonant inductor (401) and the second phase resonant inductor (402) are separately disposed on different E-type magnetic cores (403, 404), wherein the different E-type magnetic cores (403, 404) are integrated on a same I-type magnetic core (405);
wherein an air gap between an E-type magnetic core (403, 404) and the I-type magnetic core (405) is. adjustable for adjusting a coupling coefficient between the first phase resonant inductor (401) and the second phase resonant inductor (402).

2. The resonant conversion circuit according to claim 1, wherein the resonant inductors in the resonant conversion circuit units being magnetically integrated in the inter-phase manner on the same magnetic core comprises:
resonant inductors of different phases being separately disposed on different PQ-type magnetic cores, wherein the different PQ-type magnetic cores are integrated on a same I-type magnetic core.

3. The resonant conversion circuit according to claim 2, wherein a coupling coefficient between resonant inductors of two phases is adjusted by adjusting an air gap between a PQ-type magnetic core and the I-type magnetic core.

4. The resonant conversion circuit according to claim 1, wherein the resonant inductors in the resonant conversion circuit units being magnetically integrated in the inter-phase manner on the same magnetic core comprises:
resonant inductors of different phases being separately disposed on different side pillars of a magnetic core integrating two E-type magnetic cores.

5. The resonant conversion circuit according to claim 4, wherein a coupling coefficient between resonant inductors of two phases is adjusted by adjusting an air gap between central pillars of the two E-type magnetic cores.

6. The resonant conversion circuit according to claim 1, wherein the magnetic devices in the resonant conversion circuit units being magnetically integrated in the inter-phase manner on the same magnetic core comprises:
a resonant inductor and a transformer in the resonant conversion circuit units being magnetically integrated in the inter-phase manner on the same magnetic core.

7. The resonant conversion circuit according to claim 6, wherein the resonant inductor and transformer in the resonant conversion circuit units being magnetically integrated in the inter-phase manner on the same magnetic core comprises:
a first-phase resonant inductor and a second-phase transformer being separately disposed on different E-type magnetic cores, wherein the different E-type magnetic cores are integrated on an I-type magnetic core.

8. The resonant conversion circuit according to claim 7, wherein a coupling coefficient between the first-phase resonant inductor and the second-phase transformer is adjusted by adjusting an air gap between an E-type magnetic core and the I-type magnetic core.

9. The resonant conversion circuit according to claim 6, wherein the resonant inductor and transformer in the resonant conversion circuit units being magnetically integrated in the inter-phase manner on the same magnetic core comprises:
a first-phase resonant inductor and a second-phase transformer being separately disposed on different PQ-type magnetic cores, wherein the different PQ-type magnetic cores are integrated on an I-type magnetic core.

10. The resonant conversion circuit according to claim 9, wherein a coupling coefficient between the first-phase resonant inductor and the second-phase transformer is adjusted by adjusting an air gap between a PQ-type magnetic core and the I-type magnetic core.

11. The resonant conversion circuit according to claim 1, wherein the magnetic devices in the resonant conversion circuit units being magnetically integrated in the inter-phase manner on the same magnetic core comprises:
resonant inductors in the resonant conversion circuit units being magnetically integrated in the inter-phase manner on a same magnetic core, and transformers being magnetically integrated in the inter-phase manner on a same magnetic core.

12. The resonant conversion circuit according to claim 11, wherein the transformers being magnetically integrated in the inter-phase manner on the same magnetic core comprises:
a first-phase transformer and a second-phase transformer being separately disposed on different E-type magnetic cores, wherein the different E-type magnetic cores are integrated on an I-type magnetic core.

13. The resonant conversion circuit according to claim 11, wherein the transformers being magnetically integrated in the inter-phase manner on the same magnetic core comprises:
a first-phase transformer and a second-phase transformer being separately disposed on different PQ-type magnetic cores, wherein the different PQ-type magnetic cores are integrated on an I-type magnetic core.

14. The resonant conversion circuit according to any one of claims 1 to 13, wherein the resonant conversion circuit units comprise:
symmetric half-bridge resonant conversion circuit units;
or asymmetric half-bridge resonant conversion circuit units;
or full-bridge resonant conversion circuit units.

15. The resonant conversion circuit according to any one of claims 1 to 13, wherein the resonant conversion circuit units comprise:
LLC resonant conversion circuit units, series resonant conversion circuit units, parallel resonant conversion circuit units, or series-parallel resonant conversion circuit units.

## Patentansprüche

1. Resonanzumwandlungsschaltung, umfassend:
Resonanzumwandlungsschaltung-Einheiten mit mindestens zwei Phasen, parallel verschachtelt, wobei magnetische Vorrichtungen in den Resonanzumwandlungsschaltung-Einheiten in einer Zwischenphasen-Weise auf einem selben magnetischen Kern (403, 404, 405) magnetisch integriert sind;
**dadurch gekennzeichnet, dass**
ein erster Phasenresonanzinduktor (401) und ein zweiter Phasenresonanzinduktor (402) in den Resonanzumwandlungsschaltung-Einheiten in der Zwischenphasen-Weise auf demselben magnetischen Kern magnetisch integriert sind;
wobei der erste Phasenresonanzinduktor (401) und der zweite Phasenresonanzinduktor (402) auf verschiedenen magnetischen Kernen vom Typ E (403, 404) separat angeordnet sind, wobei die verschiedenen magnetischen Kerne vom Typ E (403, 404) auf einem selben magnetischen Kern vom Typ 1 (405) integriert sind;
wobei ein Luftspalt zwischen einem magnetischen Kern vom Typ E (403, 404) und dem magnetischen Kern vom Typ I (405) anpassbar ist, einen Kopplungskoeffizienten zwischen dem ersten Phasenresonanzinduktor (401) und dem zweiten Phasenresonanzinduktor (402) anzupassen.

2. Resonanzumwandlungsschaltung nach Anspruch 1, wobei die Resonanzinduktoren in den Resonanzumwandlungsschaltung-Einheiten, die in der Zwischenphasen-Weise auf demselben magnetischen Kern magnetisch integriert sind, umfassen:
Resonanzinduktoren verschiedener Phasen, die auf verschiedenen magnetischen Kernen vom Typ PQ separat angeordnet sind, wobei die verschiedenen Kerne vom Typ PQ auf einem selben magnetischen Kern vom Typ I integriert sind.

3. Resonanzumwandlungsschaltung nach Anspruch 2, wobei ein Kopplungskoeffizient zwischen Resonanzinduktoren von zwei Phasen durch Anpassen eines Luftspalts zwischen einem magnetischen Kern vom Typ PQ und dem magnetischen Kern vom Typ I angepasst wird.

4. Resonanzumwandlungsschaltung nach Anspruch 1, wobei die Resonanzinduktoren in den Resonanzumwandlungsschaltung-Einheiten, die in der Zwischenphasen-Weise auf demselben magnetischen Kern magnetisch integriert sind, umfassen:
Resonanzinduktoren verschiedener Phasen, die auf verschiedenen Seitensäulen eines magnetischen Kerns, der zwei magnetische Kerne vom Typ E integriert, separat angeordnet sind.

5. Resonanzumwandlungsschaltung nach Anspruch 4, wobei ein Kopplungskoeffizient zwischen Resonanzinduktoren von zwei Phasen durch Anpassen eines Luftspalts zwischen zentralen Säulen der beiden magnetischen Kerne vom Typ E angepasst wird.

6. Resonanzumwandlungsschaltung nach Anspruch 1, wobei die magnetischen Vorrichtungen in den Resonanzumwandlungsschaltung-Einheiten, die in der Zwischenphasen-Weise auf demselben magnetischen Kern magnetisch integriert sind, umfassen:
einen Resonanzinduktor und einen Transformator in den Resonanzumwandlungsschaltung-Einheiten, die in der Zwischenphasen-Weise auf demselben magnetischen Kern magnetisch integriert sind.

7. Resonanzumwandlungsschaltung nach Anspruch 6, wobei der Resonanzinduktor und der Transformator in den Resonanzumwandlungsschaltung-Einheiten, die in der Zwischenphasen-Weise auf demselben magnetischen Kern magnetisch integriert sind, umfassen:
einen Resonanzinduktor der ersten Phase und einen Transformator der zweiten Phase, die auf verschiedenen magnetischen Kernen vom Typ E separat angeordnet sind, wobei die verschiedenen magnetischen Kerne vom Typ E auf einem magnetischen Kern vom Typ I integriert sind.

8. Resonanzumwandlungsschaltung nach Anspruch 7, wobei ein Kopplungskoeffizient zwischen dem Resonanzinduktor der ersten Phase und dem Transformator der zweiten Phase durch Anpassen eines Luftspalts zwischen einem magnetischen Kern vom Typ E und dem magnetischen Kern vom Typ I angepasst wird.

9. Resonanzumwandlungsschaltung nach Anspruch 6, wobei der Resonanzinduktor und der Transformator in den Resonanzumwandlungsschaltung-Einheiten, die in der Zwischenphasen-Weise auf demselben magnetischen Kern magnetisch integriert sind, umfassen:
einen Resonanzinduktor der ersten Phase und einen Transformator der zweiten Phase, die auf verschiedenen magnetischen Kernen vom Typ PQ separat angeordnet sind, wobei die verschiedenen magnetischen Kerne vom Typ PQ auf einem magnetischen Kern vom Typ I integriert sind.

10. Resonanzumwandlungsschaltung nach Anspruch 9, wobei ein Kopplungskoeffizient zwischen dem Resonanzinduktor der ersten Phase und dem Transformator der zweiten Phase durch Anpassen eines Luftspalts zwischen einem magnetischen Kern vom Typ PQ und dem magnetischen Kern vom Typ I angepasst wird.

11. Resonanzumwandlungsschaltung nach Anspruch 1, wobei die magnetischen Vorrichtungen in den Resonanzumwandlungsschaltung-Einheiten, die in der Zwischenphasen-Weise auf demselben magnetischen Kern magnetisch integriert sind, umfassen:
Resonanzinduktoren in den Resonanzumwandlungsschaltung-Einheiten, die in der Zwischenphasen-Weise auf einem selben magnetischen Kern magnetisch integriert sind, und Transformatoren, die in der Zwischenphasen-Weise auf einem selben magnetischen Kern magnetisch integriert sind.

12. Resonanzumwandlungsschaltung nach Anspruch 11, wobei die Transformatoren, die in der Zwischenphasen-Weise auf demselben magnetischen Kern magnetisch integriert sind, umfassen:
einen Transformator der ersten Phase und einen Transformator der zweiten Phase, die auf verschiedenen magnetischen Kernen vom Typ E separat angeordnet sind, wobei die verschiedenen magnetischen Kerne vom Typ E auf einem magnetischen Kern vom Typ I integriert sind.

13. Resonanzumwandlungsschaltung nach Anspruch 11, wobei die Transformatoren, die in der Zwischenphasen-Weise auf demselben magnetischen Kern magnetisch integriert sind, umfassen:
einen Transformator der ersten Phase und einen Transformator der zweiten Phase, die auf verschiedenen magnetischen Kernen vom Typ PQ separat angeordnet sind, wobei die verschiedenen magnetischen Kerne vom Typ PQ auf einem magnetischen Kern vom Typ I integriert sind.

14. Resonanzumwandlungsschaltung nach einem der Ansprüche 1 bis 13, wobei die Resonanzumwandlungsschaltung-Einheiten umfassen:
symmetrische Halbbrücken-Resonanzumwandlungsschaltung-Einheiten;
oder asymmetrische Halbbrücken-Resonanzumwandlungsschaltung-Einheiten;
oder Vollbrücken-Resonanzumwandlungsschaltung-Einheiten.

15. Resonanzumwandlungsschaltung nach einem der Ansprüche 1 bis 13, wobei die Resonanzumwandlungsschaltung-Einheiten umfassen:
LLC-Resonanzumwandlungsschaltung-Einheiten, seiielle Resonanzumwandlungsschaltung-Einheiten, parallele Resonanzumwandlungsschaltung-Einheiten oder seriell-parallele Resonanzumwandlungsschaltung-Einheiten.

## Revendications

1. Circuit de conversion résonnant, comprenant :
des unités à circuits de conversion résonnants ayant au moins deux phases entrelacées en parallèle, dans lequel des dispositifs magnétiques contenus dans les unités à circuits de conversion résonnants sont intégrés magnétiquement dans une configuration interphase sur un même noyau magnétique (403, 404, 405) ;
**caractérisé en ce qu'**une inductance résonnante de première phase (401) et une inductance résonnante de seconde phase (402) contenues dans les unités à circuits de conversion résonnants sont intégrées magnétiquement dans la configuration interphase sur le même noyau magnétique ;
dans lequel l'inductance résonnante de première phase (401) et l'inductance résonnante de seconde phase (402) sont disposées séparément sur des noyaux magnétiques de type E différents (403, 404), dans lequel les noyaux magnétiques de type E différents (403, 404) sont intégrés sur un même noyau magnétique de type I (405) ;
dans lequel un entrefer entre un noyau magnétique de type E (403, 404) et le noyau magnétique de type I (405) est réglable pour régler un coefficient de couplage entre l'inductance résonnante de première phase (401) et l'inductance résonnante de seconde phase (402).

2. Circuit de conversion résonnant selon la revendication 1, dans lequel le fait que les inductances résonnantes contenues dans les unités à circuits de conversion résonnants sont intégrées magnétiquement dans la configuration interphase sur le même noyau magnétique comprend :
le fait que des inductances résonnantes de phases différentes sont disposées séparément sur des noyaux magnétiques de type PQ différents, dans lequel les noyaux magnétiques de type PQ différents sont intégrés sur un même noyau magnétique de type I.

3. Circuit de conversion résonnant selon la revendication 2, dans lequel un coefficient de couplage entre des inductances résonnantes de deux phases est réglé en réglant un entrefer entre un noyau magnétique de type PQ et le noyau magnétique de type I.

4. Circuit de conversion résonnant selon la revendication 1, dans lequel le fait que les inductances résonnantes contenues dans les unités à circuits de conversion résonnants sont intégrées magnétiquement dans la configuration interphase sur le même noyau magnétique comprend :
le fait que des inductances résonnantes de phases différentes sont disposées séparément sur des montants latéraux différents d'un noyau magnétique intégrant deux noyaux magnétiques de type E.

5. Circuit de conversion résonnant selon la revendication 4, dans lequel un coefficient de couplage entre des inductances résonnantes de deux phases est réglé en réglant un entrefer entre des montants centraux des deux noyaux magnétiques de type E.

6. Circuit de conversion résonnant selon la revendication 1, dans lequel le fait que les dispositifs magnétiques contenus dans les unités à circuits de conversion résonnants sont intégrés magnétiquement dans la configuration interphase sur le même noyau magnétique comprend :
le fait qu'une inductance résonnante et qu'un transformateur contenus dans les unités à circuits de conversion résonnants sont intégrés magnétiquement dans la configuration interphase sur le même noyau magnétique.

7. Circuit de conversion résonnant selon la revendication 6, dans lequel le fait que l'inductance résonnante et que le transformateur contenus dans les unités à circuits de conversion résonnants sont intégrés magnétiquement dans la configuration interphase sur le même noyau magnétique comprend :
le fait qu'une inductance résonnante de première phase et qu'un transformateur de seconde phase sont disposés séparément sur des noyaux magnétiques de type E différents, dans lequel les noyaux magnétiques de type E différents sont intégrés sur un noyau magnétique de type I.

8. Circuit de conversion résonnant selon la revendication 7, dans lequel un coefficient de couplage entre l'inductance résonnante de première phase et le transformateur de seconde phase est réglé en réglant un entrefer entre un noyau magnétique de type E et le noyau magnétique de type I.

9. Circuit de conversion résonnant selon la revendication 6, dans lequel le fait que l'inductance résonnante et que le transformateur contenus dans les unités à circuits de conversion résonnants sont intégrés magnétiquement dans la configuration interphase sur le même noyau magnétique comprend :
le fait qu'une inductance résonnante de première phase et qu'un transformateur de seconde phase sont disposés séparément sur des noyaux magnétiques de type PQ différents, dans lequel les noyaux magnétiques de type PQ différents sont intégrés sur un noyau magnétique de type I.

10. Circuit de conversion résonnant selon la revendication 9, dans lequel un coefficient de couplage entre l'inductance résonnante de première phase et le transformateur de seconde phase est réglé en réglant un entrefer entre un noyau magnétique de type PQ et le noyau magnétique de type I.

11. Circuit de conversion résonnant selon la revendication 1, dans lequel le fait que les dispositifs magnétiques contenus dans les unités à circuits de conversion résonnants sont intégrés magnétiquement dans la configuration interphase sur le même noyau magnétique comprend :
le fait que des inductances résonnantes contenues dans les unités à circuits de conversion résonnants sont intégrées magnétiquement dans la configuration interphase sur un même noyau magnétique, et le fait que des transformateurs sont intégrés magnétiquement dans la configuration interphase sur un même noyau magnétique.

12. Circuit de conversion résonnant selon la revendication 11, dans lequel le fait que les transformateurs sont intégrés magnétiquement dans la configuration interphase sur le même noyau magnétique comprend :
le fait qu'un transformateur de première phase et qu'un transformateur de seconde phase sont disposés séparément sur des noyaux magnétiques de type E différents, dans lequel les noyaux magnétiques de type E différents sont intégrés sur un noyau magnétique de type I.

13. Circuit de conversion résonnant selon la revendication 11, dans lequel le fait que les transformateurs sont intégrés magnétiquement dans la configuration interphase sur le même noyau magnétique comprend :
le fait qu'un transformateur de première phase et qu'un transformateur de seconde phase sont disposés séparément sur des noyaux magnétiques de type PQ différents, dans lequel les noyaux magnétiques de type PQ différents sont intégrés sur un noyau magnétique de type I.

14. Circuit de conversion résonnant selon l'une quelconque des revendications 1 à 13, dans lequel les unités à circuits de conversion résonnants comprennent :
des unités à circuits de conversion résonnants à demi-ponts symétriques ;
ou des unités à circuits de conversion résonnants à demi-ponts asymétriques ;
ou des unités à circuits de conversion résonnants à ponts entiers.

15. Circuit de conversion résonnant selon l'une quelconque des revendications 1 à 13, dans lequel les unités à circuits de conversion résonnants comprennent :
des unités à circuits de conversion résonnants LLC, des unités à circuits de conversion résonnants en série, des unités à circuits de conversion résonnants en parallèle, ou des unités à circuits de conversion résonnants en série-parallèle.
